# EUROPEAN PATENT SPECIFICATION

(11) **EP 2 198 526 B1**
(45) Date of publication and mention of the grant of the patent: **30.11.2011**
(21) Application number: 07819235.8
(22) Date of filing: 19.10.2007
(51) Int. Cl.: H04B 1/38

(54) **ENHANCED CIGARETTE LIGHTER ADAPTER**
ERWEITERTER ZIGARETTENANZÜNDER-ADAPTER
ADAPTATEUR D'ALLUME-CIGARE AMÉLIORÉ

(43) Date of publication of application: 23.06.2010
(60) Divisional application: 10075350.8
(73) Proprietor: TomTom International B.V., 1017 CT Amsterdam (NL)
(72) Inventor: LUCIEN, Groenhuijzen, NL-1335 KD Almere (NL); ASHLEY, Sayed, London SW9 9BB (GB)
(86) International application number: PCT/EP2007/009172
(87) International publication number: WO 2009/049657

(56) References cited:
- WO-A-92/14328
- WO-A-2005/020453

## Description

### BACKGROUND OF THE INVENTION

The use of CLAs to provide power to a wide variety of apparatus is known. Typically, such CLAs are provided with a body portion and a barrel portion on which are provided the electrical contacts. A first contact pin protrudes from the end of the barrel portion, and one or more second contacts are provided on the cylindrical periphery of the barrel portion such that when the CLA is inserted into the cigarette lighter of a vehicle, an electrical circuit, including whatever electronics are provided inside the CLA, is completed, and power can be drawn from the vehicle battery. Usually, vehicle batteries provide a 12V DC power source, whereas the majority of electronic apparatus which might be used in a car will require slightly different, albeit still low, voltage. Examples of apparatus include laptop computers, in-car DVD players, mobile telephones, and in-car or portable navigation devices, with which this invention is primarily concerned. Power is provided to the apparatus by means of a cable which is electrically connected internally to the electronics inside the CLA, and which emerges from the rear or side of the body of the CLA, ultimately terminating in a suitable connector.

Personal navigation devices or PNDs are being widely adopted by drivers and owners of vehicles throughout the world. The navigation assistance provided by such devices is facilitated by on-board processing equipment which accurately (within about 10m) determines the position of the PND on the surface of the earth, and associates that position with digitized map data provided in memory accessible to the PND, usually either in a small memory card, or on-board RAM or ROM. As is known, PNDs can receive user input of a desired destination in a variety of ways, whereupon the PND calculates a best route according to various algorithms and user requirements and then displays a relevant portion of a map along with a route to be navigated. Typically the PND will include an internal battery, but as most PNDs include a display screen for real-time display of map data as the vehicle moves, they are relatively power-hungry devices and can only be used on battery power alone for short journeys.

CLA adapters which provide power for PNDs and for re-charging the batteries within them, are known. Currently, CLAs are aftermarket accessories which provide only power to the PND thereby having limited market value, especially when competing with home chargers and other charging devices. Accordingly, a. need exists in the art for a more cost effective, functional and consumer-appealing CLA.

Published US patent application US2005/005440 discloses a CLA which is in the traditional form having a barrel portion with contacts and a body. Within the body there is further provided a first circuit for power management, regulation, and delivery to a first output, and one or more further circuits, powered from the contacts, capable communicating in a wireless local area network (WLAN). An antenna is further provided in the body, the signal from said antenna being delivered to the WLAN circuitry, a separate output for which is also provided. Both outputs are in the form of two or more cables emerging from the rear of the body of the CLA, for separately providing a recharging power source, and telecommunications data derived from the signal received by the antenna within the device.

According to the present invention there is provided a cigarette lighter adapter (CLA) as claimed in claim 1.

Preferably, the alternative power source is in the form of a rechargeable, battery, such as a Lithium Ion battery, a nickel-metal-halide batter, or the like.

In a preferred arrangement, the electronic circuit also includes a recharging electronics which are capable of recharging the battery when a source of power is being provided though the contacts from a live vehicle cigarette lighter.

The CLA includes a secondary electronic circuit, which is also directly or indirectly connected to said contacts, as well as to the battery, such being adapted to effect a recharging function on said battery when a source of power is being derived from said contacts.

In a most preferred arrangement, CLA further includes a voltage switching regulator, which may be included in or be separate from the secondary electronic circuit.

In a most preferred arrangement, the electronic circuit is a wireless telecommunications processing circuit, for example capable of processing at least one of the following telecommunications standards or protocols: GSM, GPRS, EDGE, HSDPA, CDMA, WCDMA, WiFi, WiMax, Bluetooth. Most preferably, the electronic circuit is a wireless modem.

Preferably, the CLA output is a cable in electrical communication with said electronic circuit.

Most preferably, said CLA is provided with one or more LEDs indicative of one of the charging of the battery, the existence of a source of power for the CLA from a live vehicle cigarette lighter, and the processing of signals received by the antenna.

Preferably, the CLA is provided with at least two LEDs, preferably of different colours, a first LED providing an indication of the existence of a source of power for the CLA, and a second LED for providing an indication of the processing of signals received by the antenna.

Ina preferred arrangement, the electronic circuit is capable of amalgamating the antenna signal, an electronically processed version thereof, or a data signal derived therefrom, with said power signal, and delivering both in conjunction to said output.

In a most preferred arrangement, the electronic circuit is a quad- or tri-band GPRS modem which is capable of extracting traffic congestion data from the signal received by the antenna, and the output is a serial output, such as a USB socket or cable, or a UART socket or cable, any of which can be used to deliver both power and data to a portable navigation device.

By providing the antenna and associated processing electronics in the CLA, the GPRS modem and related elements may be removed from the PND thereby saving engineering and manufacturing costs along with providing the industrial designer with fewer components to squeeze into the PND thereby opening the PND to other designs.

In a further preferred embodiment, a subscriber identity module (SIM) card connector is provided, in electrical communication with said electronic circuit whereby the CLA can automatically subscribe to, and thus process received wireless signals from, a particular mobile telecommunications service provider when a suitably enabled SIM card is present in said connector.

In a preferred arrangement, the modem is capable of establishing a wireless connection using at least one of a subscriber identifier (IMSI), a modem identifier (IMEI), and an identifier of a PND (PND UID).

In a further preferred arrangement, the CLA further includes power control electronics.

Most preferably, the antenna is a substantially flat component affixed to the inside surface of a part of the body of the CLA.

In a particularly preferred embodiment, the CLA is provided with vents in its body through which hot air, generated as a result of contact with the hot-working electronic circuit(s) and other electronic circuits, can escape.

Most preferably, the CLA includes a first electronic circuit which receives a signal from the antenna, and one or more second electronic circuits for providing at least one of power management, regulation, switching and recharging functions, wherein at least one of the second circuits is separate from the first electronic circuit but in electrical communication therewith, and wherein said one or more second electronic circuits is disposed proximate the vents provided in the body of the CLA.

Most preferably the vents are provided toward the front of the body of the CLA, with the battery, first electronic circuit, and optional SIM connector being provided towards the rear of the body, remote from the barrel portion This arrangement is advantageous because the power management, regulation, switching and recharging functions which the CLA may have, are performed by the vented electronic circuitry, such functions (and circuitry) typically generating far more heat than the first electronic circuitry which processes the antenna signals, Accordingly, this segregation is an efficient and safe arrangement of components within the CLA.

In a most preferred arrangement, the one or more secondary electronic circuits is provided on a pair of PCBs disposed adjacent to one another inside a forward portion of the body of the CLA, each said PCB being additionally disposed proximate to a vent on the outside of the CLA.

A specific description of the invention will now be described by way of example, with reference to the following drawings:
Figure 1 shows an exploded perspective view of a CLA of a type suitable for use with the present invention,
Figures 2A, 2B show different perspective views of the CLA of Fig. 1 to which components have been added,
Figure 3A provides a schematic circuit diagram of a CLA in accordance with the present invention,
Figure 3B provides a schematic circuit diagram of another CLA,
Figure 4 shows a perspective view of a CLA having an antenna therein,

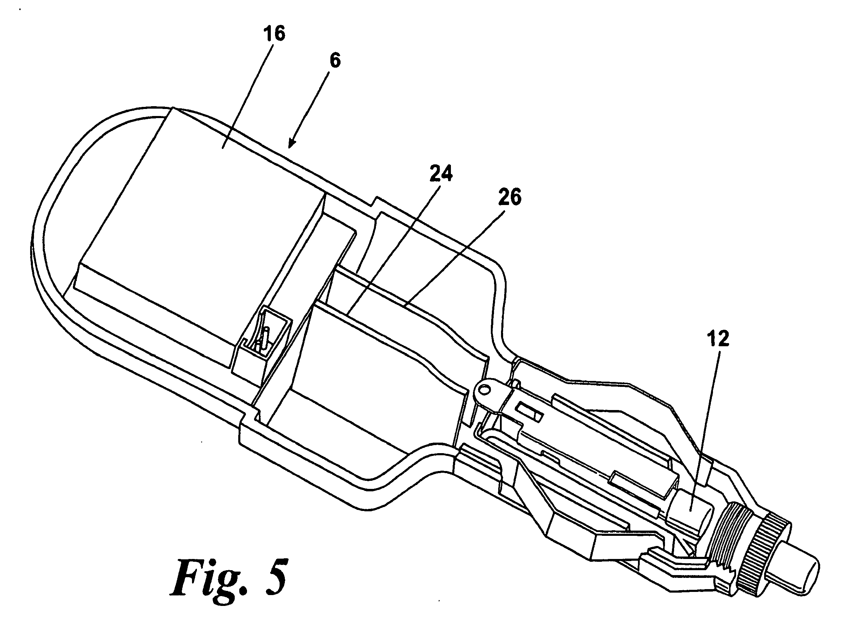

Figures 5 shows a perspective view of the CLA of Figure 4 in partially assembled state,
Figure 6 shows the CLA of Figures of 4 and 5 in a further assembled state, and
Fig. 7 shows a CLA in completed condition with LEDs visible at the rear.

### DETAILED DESCRIPTION OF THE INVENTION

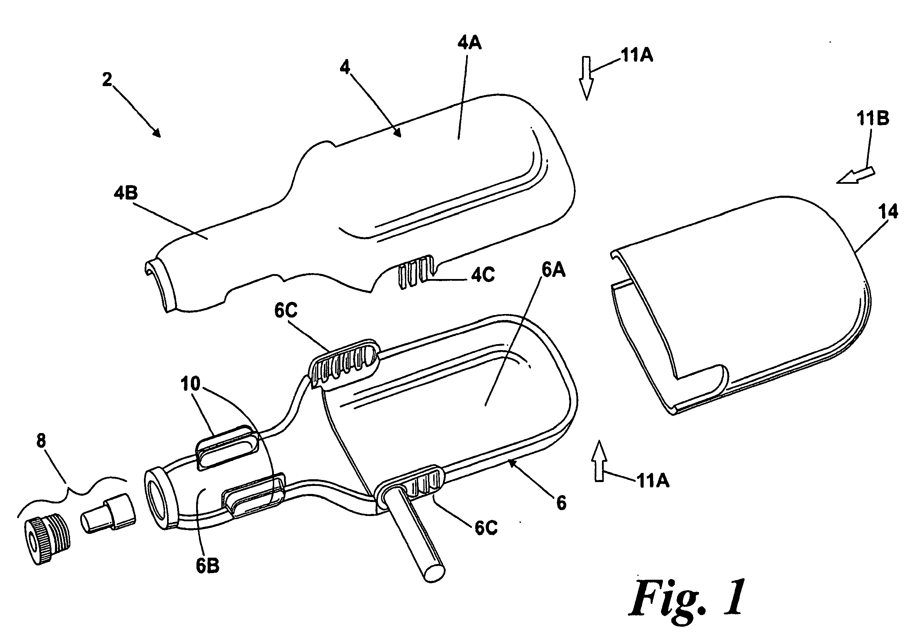

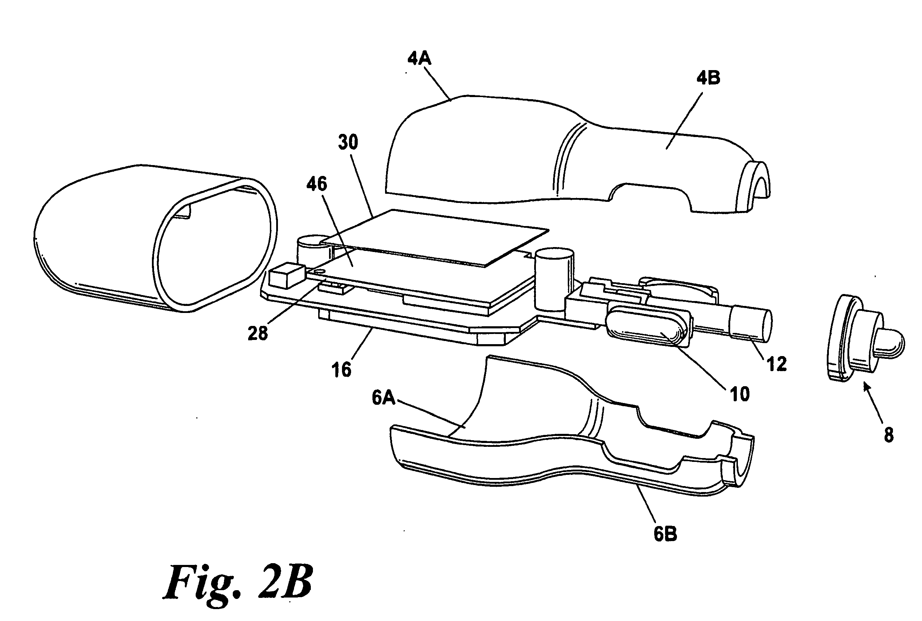

Referring firstly to Figure 1, there is shown a CLA generally indicated at 2 consisting of respective upper and lower casing halves 4, 6, each having a body part 4A, 6A and barrel part 4B, 6B. Together the casing halves, when assembled define a body with a cavity in which the electronics of the CLA may be provided, and a barrel part in which a first contact 8 and second contacts 10 are, usually springingly, mounted, and connected in turn through a fuse 12 (shown in Figure 2B) to the electronics of the device.

Assembly of the CLA is completed in stages, with the various components being inserted into one or both of the casing halves and electrically connected together, whereupon the casing halves are brought together in snap-fitting manner as indicated by arrows 11A, and finally a cover 14 is slid axially as indicated at 11B over the assembled casing halves to encapsulate the majority of the body of the CLA therein. As can be seen from the figure, each casing half is provided with vent formations 4C, 6C which cooperate or otherwise interengage when the casing halves are brought together to define vents through which hot air generated inside the CLA during operation can escape. It is also worth mentioning, and advantageous, that the vents are provided opposite one another so that air can flow through the device in the most direct manner possible.

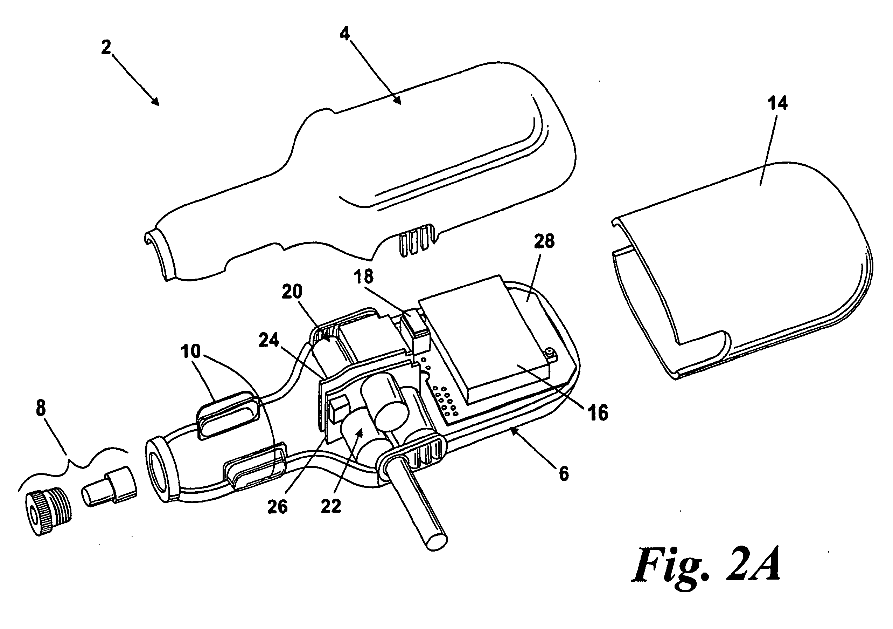

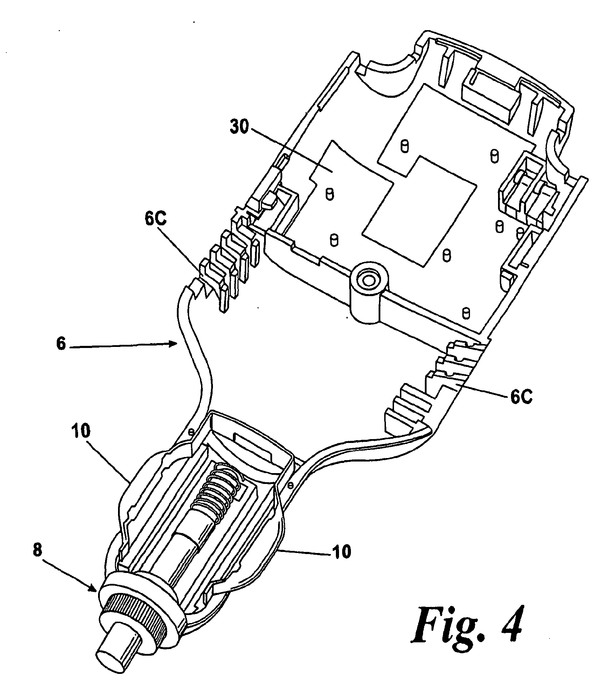

As can be seen from Figure 2A, a rechargeable battery 16 is provided with an associated connector 18, which is in electrical communication with one or more secondary electronic circuits 20, 22, which in this embodiment are mounted on separated but adjacent printed circuit boards (PCBs) 24, 26 respectively. Such secondary electronic circuits provide such functions as power management, control, switching, regulation, and re-charging. Additionally, the battery 16 and associated connector are also mounted on a suitable PCB 28, beneath which is mounted a substantially planar antenna 30, as shown in Figures 2B and 4.

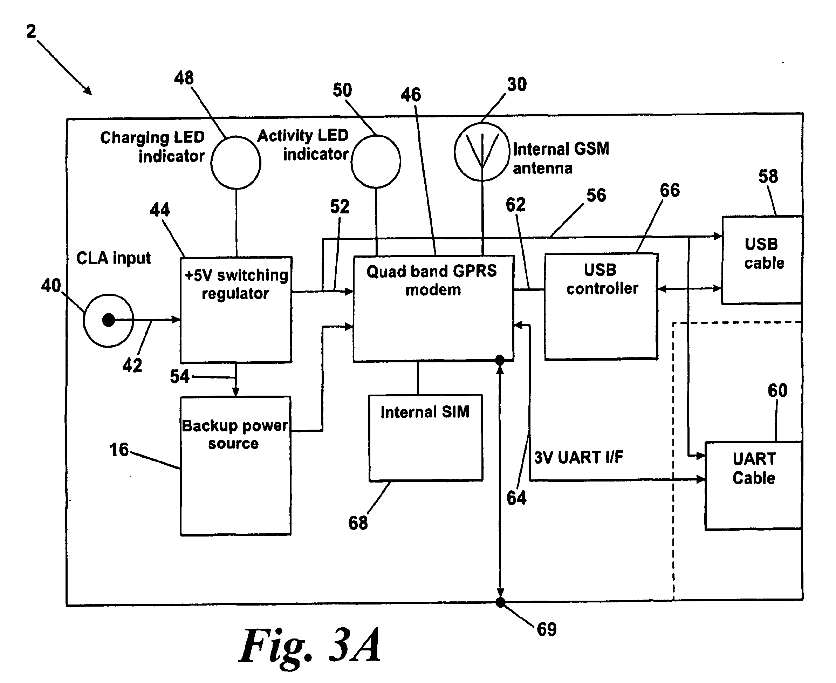

Referring now to Figure 3A, a schematic block diagram is provided of the components provided within CLA 2 of the present invention. The on-board battery 16 is shown, and the contacts are schematically represented at 40, the source of power derived therefrom being represented at 42 and feeding a switching regulator 44 which operatively reduces the traditional DC car battery voltage from 12V DC to 5V DC. A quad band GPRS modem or other wireless telecommunications processing device is provided at 46, and both regulator 44 and modem 46 are connected to LEDs 48, 50 respectively, which are ideally of different colours and demonstrate the charging of the battery 16 and/or power supply through the contacts 42 on the one hand, and the processing activity of the modem 46 respectively. It is to be noted that the voltage regulator is in electrical communication with both modem 46 and battery 16 at 52 and 54 respectively, and is capable of providing a source of power to both. Furthermore, the output of the regulator 44 is also, in this embodiment, directly coupled at 56 to both a USB cable output 58 and optionally a conventional UART (universal asynchronous receiver/transmitter) cable output 60.

It should be mentioned that the presence of both a USB cable output and a UART cable output is unlikely to ever be implemented in practice as only one of these outputs is likely ever to be required, but the Figure demonstrates the possibilities for connection. Additionally, it should be mentioned that in the embodiment shown, a power signal is fed directly from the regulator 44 to both - in an alternative embodiment, the modem 46 may additionally include basic power management and/or transfer functions such that the direct connections 56 are not required, a power signal being delivered to outputs 58, 60 in conjunction with the data signals complying with the particular communications standards. Such signals are provided by the modem 46, at 62 or 64as the case may be, and in the case that a USB cable output is provided, an additional USB. controller 66 may be provided to ensure USB signals comply with the USB communications standard.

A SIM module 68, capable of receiving a conventional SIM card, is provided in communication with the modem 46 for enabling subscription to a particular wireless telecommunications network provided by a service provider by whom the SIM card is jssued, and of course an antenna 30 provides a means for collecting wireless signals being transmitted through space, said antenna again communicating with said modem 46 to deliver a useful signal thereto. Additionally; a reset facility in the form of a switch or the like which causes a soft and/or hard reset of the modem 46 may be provided. Such facility may also be extended to the regulator 44 if required.

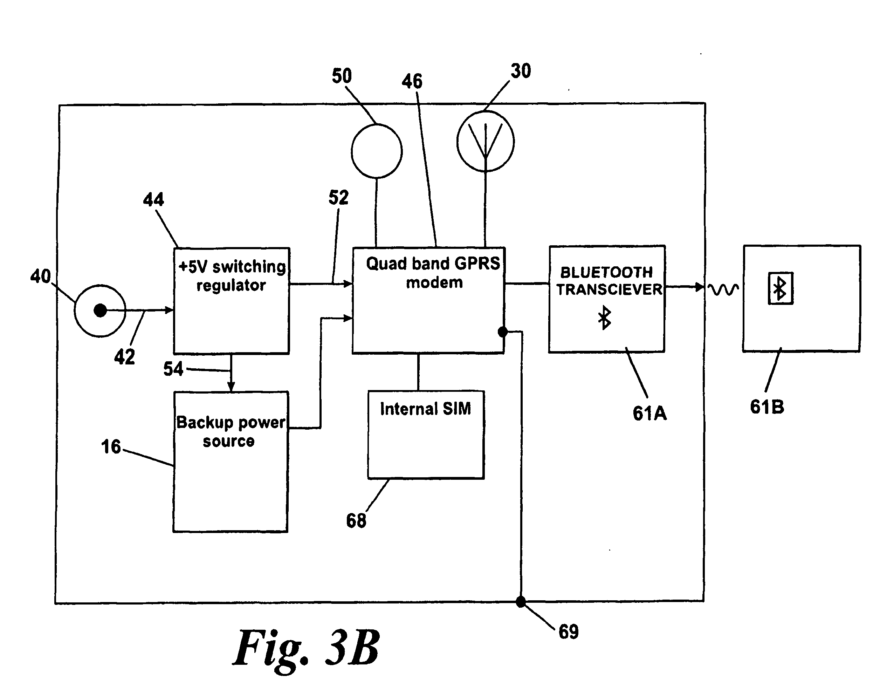

Referring to Figure 3B, an arrangement is schematically illustrated where like reference numerals be employed to those of Figure 3A to identify like components. The battery 16 is optional, and thereby does not fall within the scope of the claims when the battery is not present. The SIM module 68 provides an authorization means for the modem 46 to enable the receipt of signals from an ambient mobile telecommunications service and the output of the modem, whether the basic antenna signal, an electronically processed version thereof, or data extracted therefrom is delivered to a wireless transceiver device 61A, which may be ideally be a Bluetooth® transceiver employed for wireless communication with a remote device 61B. In a most preferred arrangement, both modem 46 and transceiver 61A are provided with a source of power from the contact 40,or if provided, from the optional battery 16.

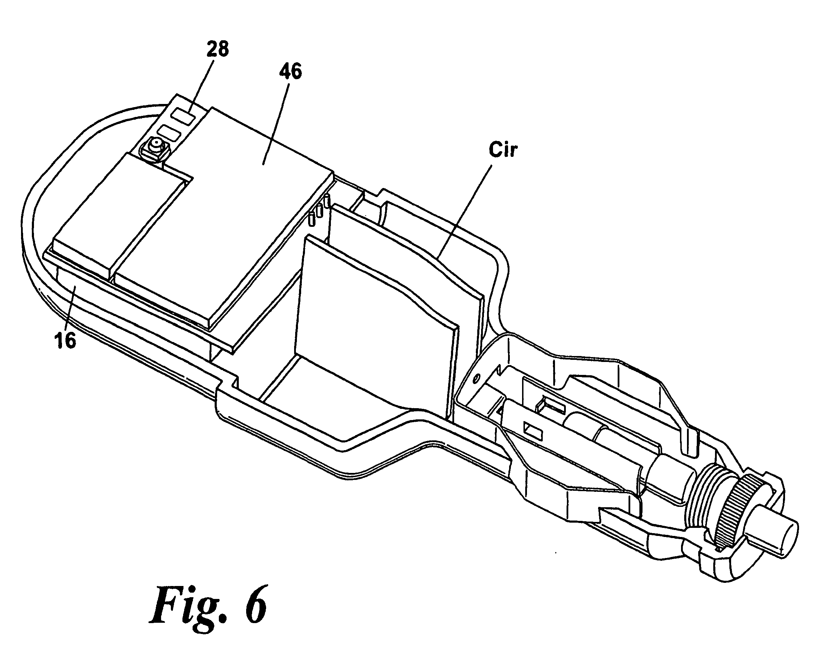

Referring to Figure 6, it can be seen that the GPRS modem 46, which is now available as an "off-the-shelf" type component, is mounted in adjacent relationship with the battery 16, optionally to the alternate side of the PCB 28 on which the battery is mounted.

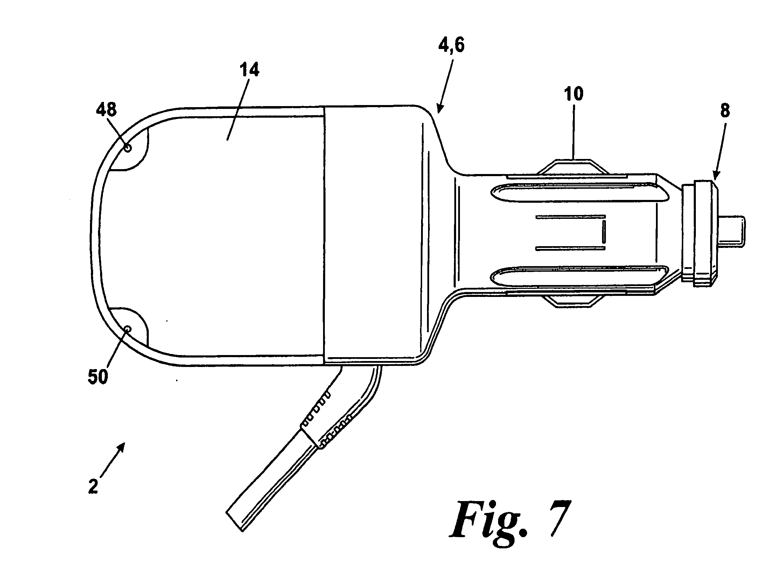

The assembled CLA is shown in Figure 7, and the LEDs 48,50, are either made visible by virtue of the cover 14 having translucent or less opaque portions in the regions proximate the LED locations therewithin, or by having suitable apertures thereat.

In summary therefore, a cigarette lighter adapter (CLA) is disclosed comprising a body and a barrel portion extending therefrom, said barrel portion including a first and second contacts respectively connectable within a vehicle cigarette lighter to be powered therefrom, said CLA being additionally provided with at least one primary electronic circuit within the body thereof, connected directly or indirectly to said contacts, and an output to which a power signal is capable of being delivered. The CLA is characterized in that it includes an antenna component in electrical communication with said primary electronic circuit, the latter delivering at least one of the antenna signal, a electronically processed version thereof, or data derived from the electronic processing thereof, to said output in conjunction with said power signal, the source of which is derived from said contacts or from an alternative power source provided within the body of said CLA, such as an on-board rechargeable battery, said power signal source further providing power to said primary electronic circuit to enable operation thereof. Further features include the provision of one or more secondary electronic circuits within the CLA to provide power management, regulation, control, switching, and/or battery re-charging functions, and the segregation of the primary and secondary electric circuits so as to ensure effective heat dissipation. Most preferably, the CLA is provided with vents adjacent which at least one of the secondary electronic circuits is provided.

## Claims

1. A cigarette lighter adapter (2) comprising a body (4A, 6A) and a barrel portion (4B, 6B) extending therefrom, said barrel portion including a first and second contacts (8, 10) respectively connectable within a vehicle cigarette lighter to be powered therefrom, said cigarette lighter adapter being additionally provided with at least one primary electronic circuit (46) within the body thereof, connected directly or
indirectly to said contacts, and one or more outputs (58, 60) to which a power signal is capable of being delivered, said cigarette lighter adapter including an antenna component (30) in electrical communication with said primary electronic circuit, the latter delivering at least one of:
- the antenna signal,
- a electronically processed version thereof,
- data derived from the electronic processing thereof
to the one or more outputs in conjunction with said power signal, the source of which is primarily derived from said contacts and which further provides power to said primary electronic circuit to enable operation thereof,
**characterised in that**
said cigarette lighter adapter further includes an on-board rechargeable alternate source of power (16) in electrical communication with said primary electronic circuit to provide power therefor in the absence of power from said contacts, and one or more secondary electronic circuits (20, 22, 44) which provides at least a recharging function for said alternate power source when power is derived through said contacts.

2. A cigarette lighter adapter (2) according to claim 1 wherein said secondary electronic circuit (44) is separate from the primary electronic circuit (46) but in electrical communication therewith to provide a source of power therefor when a source of power is derived from said contacts (8, 10).

3. A cigarette lighter adapter (2) according to claim 1 or 2 wherein said secondary electronic circuit (44) provides further functionality including one or more of power management, regulation, control and switching.

4. A cigarette lighter adapter (2) according to any preceding claim wherein a subscriber identity module (SIM) card connector (68) is provided, in electrical communication with said primary electronic circuit (46) whereby the cigarette lighter adapter can automatically subscribe to, and thus process received wireless signals from a particular mobile telecommunications service provider when a suitably enabled SIM card is present in said connector.

5. A cigarette lighter adapter (2) according to any preceding claim further including a tertiary electronic circuit being a wireless transceiver (61A) in electrical communication with the primary electronic circuit (46) whereby said
- antenna signal
- an electronically processed version thereof, or
- data derived therefrom,
Can be wirelessly communicated to a remote device.

6. A cigarette lighter adapter (2) according to any preceding claim wherein the primary electronic circuit (46) is a wireless telecommunications protocol processing circuit.

7. A cigarette lighter adapter (2) according to claim 6 wherein the primary electronic circuit (46) is a wireless modem.

8. A cigarette lighter adapter (2) according to either claim 6 or 7 wherein the wireless telecommunications protocol processing circuit (46) is adapted for at least one of the following wireless telecommunications protocols: GSM, GPRS, EDGE, HSDPA, CDMA, WCDMA, WiFi, WiMax.

9. A cigarette lighter adapter (2) according to any preceding claim wherein the cigarette lighter adapter output is a cable in direct or indirect electrical communication with said primary electronic circuit (46).

10. A cigarette lighter adapter (2) according to any preceding claim further provided with one or more LEDs (48, 50) indicative of at least one of: the charging of an on-board power source (16), the existence of a source of power for the cigarette lighter adapter from a live vehicle cigarette lighter, and the processing of signals within the primary electronic circuit (46) received by the antenna (30).

11. A cigarette lighter adapter (2) according to claim 10 wherein cigarette lighter adapter is provided with at least two LEDs (48, 50), a first LED providing an indication of the existence of a source of power for the cigarette lighter adapter, and a second LED for providing an indication of the processing of signals received by the antenna (30).

12. A cigarette lighter adapter (2) according to claim 11 wherein the LEDs (48, 50) are of different colours.

13. A cigarette lighter adapter (2) according to any preceding claim wherein the antenna (30) is a substantially flat component affixed to the inside surface of a part of the body (4A, 6A) of the cigarette lighter adapter.

14. A cigarette lighter adapter (2) according to any preceding claim further provided with vents (4C, 6C) in the body (4A, 6A) through which hot air, generated as a result of contact with the hot-working electronic circuits, can escape.

15. A cigarette lighter adapter (2) according to claim 14, wherein the vents (4C, 6C) are provided toward the front of the body proximate the barrel portion (4B, 6B) of the cigarette lighter adapter, said primary electronic circuit (46) being provided towards the rear of the body, remote from the barrel portion, and said one or more secondary electronic circuits (20, 22, 44) being also provided toward the front of the body of said cigarette lighter adapter adjacent said vents.

16. A cigarette lighter adapter according to claim 15 wherein the one or more secondary electronic circuits (20, 22, 44) is provided on a pair of PCBs (24, 26) disposed adjacent one another inside a forward portion of the body (4A, 6A) of the cigarette lighter adapter, each said PCB being additionally disposed proximate a vent (4C, 6C) on the outside of the cigarette lighter adapter.

17. A cigarette lighter adapter (2) according to any preceding claim wherein the output (58, 60) is a serial output selected from one of: a USB connector or cable, a UART connector or cable.

18. A cigarette lighter adapter (2) according to any preceding claim wherein the primary electronic circuit (46) is capable of establishing a wireless connection using at least one of a subscriber identifier (IMSI), a modem identifier (IMEI), and an identifier of a PND (PND UID).

## Patentansprüche

1. Zigarettenanzünderadapter (2), der Folgendes umfasst: einen Körper (4A, 6A) und einen sich davon erstreckenden Zylinderabschnitt (4B, 6B), wobei der genannte Zylinderabschnitt einen ersten und einen zweiten Kontakt (8, 10) aufweist, die jeweils in einem Fahrzeugzigarettenanzünder angeschlossen werden können, um von diesem gespeist zu werden, wobei der genannte Zigarettenanzünderadapter zusätzlich mit wenigstens einer primären elektronischen Schaltung (46) in seinem Körper, die direkt oder indirekt mit den genannten Kontakten verbunden ist, und einem oder mehreren Ausgängen (58, 60) versehen ist, denen ein Stromsignal zugeführt werden kann, wobei der genannte Zigarettenanzünderadapter eine Antennenkomponente (30) in elektrischer Verbindung mit der genannten primären elektronischen Schaltung aufweist, wobei Letztere wenigstens eines der Folgenden:
- das Antennensignal,
- eine elektronisch verarbeitete Version davon,
- bei der elektronischen Verarbeitung davon gewonnene Daten zu den ein oder mehreren Ausgängen in Verbindung mit dem genannten Stromsignal liefert, dessen Quelle hauptsächlich von den genannten Kontakten genommen wird und das ferner Strom zu der genannten primären elektronischen Schaltung führt, um deren Betrieb zu ermöglichen,
**dadurch gekennzeichnet, dass** der genannte Zigarettenanzünderadapter ferner eine aufladbare Bordwechselstromquelle (16) in elektrischer Verbindung mit der genannten primären elektronischen Schaltung aufweist, um Strom dafür in Abwesenheit von Strom von den genannten Kontakten zuzuführen, sowie eine oder mehrere sekundäre elektronische Schaltungen (20, 22, 44), die wenigstens eine Wiederaufladefunktion für die genannte Wechselstromquelle bereitstellen, wenn Strom durch die genannten Kontakte genommen wird.

2. Zigarettenanzünderadapter (2) nach Anspruch 1, wobei die genannte sekundäre elektronische Schaltung (44) separat von der primären elektronischen Schaltung (46), aber in elektrischer Verbindung damit ist, um eine Stromquelle hierfür bereitzustellen, wenn eine Stromquelle von den genannten Kontakten (8, 10) genommen wird.

3. Zigarettenanzünderadapter (2) nach Anspruch 1 oder 2, wobei die genannte sekundäre elektronische Schaltung (44) ferner Funktionalität einschließlich Strommanagement, Regulieren, Steuern und/oder Schalten bereitstellt.

4. Zigarettenanzünderadapter (2) nach einem der vorherigen Ansprüche, wobei ein SIM-(Subscriber Identity Module)-Kartenverbinder (68) in elektrischer Verbindung mit der genannten primären elektronischen Schaltung (46) vorgesehen ist, so dass der Zigarettenanzünderadapter automatisch bei einem bestimmten Mobiltelekommunikationsdiensteanbieter registriert und somit von diesem empfangene Funksignale verarbeiten kann, wenn eine SIM-Karte mit geeigneten Funktionen in dem genannten Verbinder vorhanden ist.

5. Zigarettenanzünderadapter (2) nach einem der vorherigen Ansprüche, der ferner eine tertiäre elektronische Schaltung aufweist, die ein Funk-Sender/Empfänger (61 A) in elektrischer Verbindung mit der primären elektronischen Schaltung (46) ist, so dass das genannte
- Antennensignal
- eine elektronische verarbeitete Version davon oder
- davon gewonnene Daten
drahtlos zu einem Ferngerät übermittelt werden können.

6. Zigarettenanzünderadapter (2) nach einem der vorherigen Ansprüche, wobei die primäre elektronische Schaltung (46) eine drahtlose Telekommunikationsprotokollverarbeitungsschaltung ist.

7. Zigarettenanzünderadapter (2) nach Anspruch 6, wobei die primäre elektronische Schaltung (46) ein Funkmodem ist.

8. Zigarettenanzünderadapter (2) nach Anspruch 6 oder 7, wobei die drahtlose Telekommunikationsprotokollverarbeitungsschaltung (46) für wenigstens eines der folgenden drahtlosen Telekommunikationsprotokolle adaptiert ist: GSM, GPRS, EDGE, HSDPA, CDMA, WCDMA, WiFi, WiMax.

9. Zigarettenanzünderadapter (2) nach einem der vorherigen Ansprüche, wobei der Ausgang des Zigarettenanzünderadapters ein Kabel in direkter oder indirekter elektrischer Verbindung mit der genannten primären elektronischen Schaltung (46) ist.

10. Zigarettenanzünderadapter (2) nach einem der vorherigen Ansprüche, der ferner mit einer oder mehreren LEDs (48, 50) versehen ist, die wenigstens eines der folgenden anzeigen: das Aufladen einer Bordstromquelle (16), das Vorliegen einer Stromquelle für den Zigarettenanzünderadapter von einem stromführenden Fahrzeugzigarettenanzünder und das Verarbeiten von Signalen, die von der Antenne (30) empfangen wurden, in der primären elektronischen Schaltung (46).

11. Zigarettenanzünderadapter (2) nach Anspruch 10, wobei der Zigarettenanzünderadapter mit wenigstens zwei LEDs (48, 50) versehen ist, einer ersten LED, die anzeigt, dass der Zigarettenanzünderadapter mit Strom von einer Quelle gespeist wird, und einer zweiten LED, die anzeigt, dass Signale, von der Antenne (30) empfangen wurden, verarbeitet werden.

12. Zigarettenanzünderadapter (2) nach Anspruch 11, wobei die LEDs (48, 50) verschiedene Farben haben.

13. Zigarettenanzünderadapter (2) nach einem der vorherigen Ansprüche, wobei die Antenne (30) eine im Wesentlichen flache Komponente ist, die an der Innenseite eines Teils des Körpers (4A, 6A) des Zigarettenanzünderadapters befestigt ist.

14. Zigarettenanzünderadapter (2) nach einem der vorherigen Ansprüche, der ferner mit Lüftungsöffnungen (4C, 6C) im Körper (4A, 6A) versehen ist, durch die heiße Luft, die infolge eines Kontakts mit den heißen elektronischen Schaltungen erzeugt wird, entweichen kann.

15. Zigarettenanzünderadapter (2) nach Anspruch 14, wobei die Lüftungsöffnungen (4C, 6C) im vorderen Teil des Körpers in der Nähe des Zylinderabschnitts (4B, 6B) des Zigarettenanzünderadapters vorgesehen sind, wobei die genannte primäre elektronische Schaltung (46) im hinteren Teil des Körpers fern vom Zylinderabschnitt vorgesehen ist, und wobei die genannten ein oder mehreren sekundären elektronischen Schaltungen (20, 22, 44) auch im vorderen Teil des Körpers des genannten Zigarettenanzünderadapters neben den genannten Lüftungsöffnungen vorgesehen sind.

16. Zigarettenanzünderadapter nach Anspruch 15, wobei die ein oder mehreren sekundären elektronischen Schaltungen (20, 22, 44) auf einem Paar PCBs (24, 26) vorgesehen ist/sind, die nebeneinander innerhalb eines vorderen Teils des Körpers (4A, 6A) des Zigarettenanzünderadapters angeordnet sind, wobei jede genannte PCB zusätzlich in der Nähe einer Lüftungsöffnung (4C, 6C) auf der Außenseite des Zigarettenanzünderadapters angeordnet ist.

17. Zigarettenanzünderadapter (2) nach einem der vorherigen Ansprüche, wobei der Ausgang (58, 60) ein serieller Ausgang ist, der ausgewählt ist aus einem USB-Verbinder oder -Kabel oder einem UART-Verbinder oder -Kabel.

18. Zigarettenanzünderadapter (2) nach einem der vorherigen Ansprüche, wobei die primäre elektronische Schaltung (46) eine drahtlose Verbindung mit einer IMSI (Teilnehmerkennung), einem IMEI (Modemkennung) und einer Kennung eines PND (PND UID) herstellen kann.

## Revendications

1. Adaptateur d'allume-cigarettes (2) comprenant un corps (4A, 6A) et une portion barillet (4B, 6B) qui s'étend à partir de celui-ci, ladite portion barillet englobant des premier et deuxième contacts (8, 10) respectivement connectables au sein d'un allume-cigarettes de véhicule afin d'être alimentés à partir de celui-ci, ledit adaptateur d'allume-cigarettes étant doté en outre d'au moins un circuit électronique primaire (46) dans le corps de celui-ci, connecté directement ou indirectement auxdits contacts, ainsi qu'une ou plusieurs sorties (58, 60) auxquelles il est possible d'injecter un signal d'énergie, ledit adaptateur d'allume-cigarettes englobant un composant antenne (30) qui est en communication électrique avec ledit circuit électronique primaire, ce dernier fournissant au moins l'un des éléments suivants, à savoir :
- le signal d'antenne,
- une version de celui-ci traitée par des moyens électroniques,
- des données dérivées du traitement électronique de celui-ci,
à ladite sortie ou auxdites plusieurs sorties en conjonction avec ledit signal d'énergie, dont la source est principalement dérivée desdits contacts, et qui en outre achemine de l'énergie audit circuit électronique primaire afin d'activer le fonctionnement de celui-ci,
**caractérisé en ce que**
ledit adaptateur d'allume-cigarettes englobe en outre une source d'énergie intégrée rechargeable en variante (16), qui est en communication électrique avec ledit circuit électronique primaire afin de fournir de l'énergie à celui-ci en l'absence d'énergie provenant desdits contacts, ainsi qu'un ou plusieurs circuits électroniques secondaires (20, 22, 44) lesquels assurent au moins une fonction de recharge pour ladite source d'énergie en variante lorsque l'énergie est dérivée par l'intermédiaire desdits contacts.

2. Adaptateur d'allume-cigarettes (2) selon la revendication 1, ledit circuit électronique secondaire (44) étant séparé du circuit électronique primaire (46), mais étant en communication électrique avec celui-ci, afin de constituer une source d'énergie pour celui-ci lorsqu'une source d'énergie est dérivée à partir desdits contacts (8, 10).

3. Adaptateur d'allume-cigarettes (2) selon la revendication 1 ou 2, ledit circuit électronique secondaire (44) procurant une fonctionnalité supplémentaire, y compris une ou plusieurs des fonctionnalités suivantes, à savoir : gestion, régulation, pilotage et commutation d'énergie.

4. Adaptateur d'allume-cigarettes (2) selon l'une quelconque des revendications précédentes, un connecteur de carte SIM (module d'identité de l'abonné) (68) étant prévu, lequel est en communication électrique avec ledit circuit électronique primaire (46), ce qui permet à l'adaptateur d'allume-cigarettes de bénéficier automatiquement d'un accès, et par conséquent de traiter des signaux sans fil qui ont été reçus en provenance d'un prestataire de services de télécommunications mobiles spécifique lorsqu'une carte SIM adéquatement validée est présente dans ledit connecteur.

5. Adaptateur d'allume-cigarettes (2) selon l'une quelconque des revendications précédentes, englobant en outre un circuit électronique tertiaire lequel se présente sous la forme d'un émetteur-récepteur sans fil (61A) en communication électrique avec le circuit électronique primaire (46), cas dans lequel
- ledit signal d'antenne,
- une version de celui-ci traitée par des moyens électroniques, ou
- des données dérivées de celle-ci,
peuvent être communiqués sans fil à un dispositif distant.

6. Adaptateur d'allume-cigarettes (2) selon l'une quelconque des revendications précédentes, le circuit électronique primaire (46) étant un circuit de traitement de protocole de télécommunications sans fil.

7. Adaptateur d'allume-cigarettes (2) selon la revendication 6, le circuit électronique primaire (46) étant un modem sans fil.

8. Adaptateur d'allume-cigarettes (2) selon la revendication 6 ou 7, le circuit de traitement de protocole de télécommunications sans fil (46) étant conçu pour l'un au moins des protocoles de télécommunications sans fil suivants, à savoir : GSM, GPRS, EDGE, HSDPA, CDMA, WCDMA, WiFi, WiMax.

9. Adaptateur d'allume-cigarettes (2) selon l'une quelconque des revendications précédentes, la sortie de l'adaptateur d'allume-cigarettes étant un câble qui est en communication électrique directe ou indirecte avec ledit circuit électronique primaire (46).

10. Adaptateur d'allume-cigarettes (2) selon l'une quelconque des revendications précédentes, qui est doté en outre d'une ou de plusieurs DEL (48, 50) qui indiquent l'un au moins des états suivants à savoir : la charge d'une source d'énergie intégrée (16), l'existence d'une source d'énergie pour l'AAC à partir d'un allume-cigarettes activé du véhicule, et le traitement de signaux au sein du circuit électronique primaire (46) reçus par l'antenne (30).

11. Adaptateur d'allume-cigarettes (2) selon la revendication 10, l'adaptateur d'allume-cigarettes étant doté d'au moins deux DEL (48, 50), une première DEL qui fournit une indication de l'existence d'une source d'énergie pour l'adaptateur d'allume-cigarettes, et une deuxième DEL qui fournit une indication du traitement de signaux reçus par l'antenne (30).

12. Adaptateur d'allume-cigarettes (2) selon la revendication 11, les DEL (48, 50) étant de différentes couleurs.

13. Adaptateur d'allume-cigarettes (2) selon l'une quelconque des revendications précédentes, l'antenne (30) étant un composant sensiblement plat lequel est fixé sur la surface interne d'une partie du corps (4A, 6A) de l'adaptateur d'allume-cigarettes.

14. Adaptateur d'allume-cigarettes (2) selon l'une quelconque des revendications précédentes, muni en outre d'évents (4C, 6C) ménagés dans le corps (4A, 6A) à travers lesquels l'air chaud, généré à la suite du contact avec les circuits électroniques fonctionnant à température élevée, peut s'échapper.

15. Adaptateur d'allume-cigarettes (2) selon la revendication 14, les évents (4C, 6C) étant pratiqués vers l'avant du corps à proximité de la portion barillet (4B, 6B) de l'adaptateur d'allume-cigarettes, ledit circuit électronique primaire (46) étant monté vers l'arrière du corps, à une certaine distance de la portion barillet, et ledit un ou plusieurs circuits électroniques secondaires (20, 22, 44) étant également montés vers l'avant du corps dudit adaptateur d'allume-cigarettes en position adjacente auxdits évents.

16. Adaptateur d'allume-cigarettes (2) selon la revendication 15, ledit un ou plusieurs circuits électroniques secondaires (20, 22, 44) étant montés sur une paire de plaquettes à circuits imprimés, PCI, (24, 26) disposées en position adjacente l'une par rapport à l'autre à l'intérieur d'une portion frontale du corps (4A, 6A) de l'adaptateur d'allume-cigarettes, chacune desdites PCI étant en outre disposée à proximité d'un évent (4C, 6C) sur la face externe de l'adaptateur d'allume-cigarettes.

17. Adaptateur d'allume-cigarettes (2) selon l'une quelconque des revendications précédentes, la sortie (58, 60) étant une sortie série laquelle est sélectionnée parmi l'un des postes suivants, à savoir : un câble ou un connecteur USB, un câble ou un connecteur UART.

18. Adaptateur d'allume-cigarettes (2) selon l'une quelconque des revendications précédentes, le circuit électronique primaire (46) étant apte à établir une connexion sans fil en faisant intervenir au moins l'un des éléments suivants, à savoir : un identifiant d'abonné (ou IMSI), un identifiant de modem (ou IMEI) et un identifiant d'un PND (UID de PND).
